Europäisches Patentamt

European Patent Office

Office européen des brevets

(11) Publication number: 0 423 598 B1

# EUROPEAN PATENT SPECIFICATION

(45) Date of publication of patent specification: 11.01.95   (51) Int. Cl.⁶: A23L 1/164

(21) Application number: 90119343.3

(22) Date of filing: 09.10.90

(54) **Corn snacks and method of manufacture.**

(30) Priority: 19.10.89 US 424061

(43) Date of publication of application:
24.04.91 Bulletin 91/17

(45) Publication of the grant of the patent:
11.01.95 Bulletin 95/02

(84) Designated Contracting States:
AT BE CH DE ES FR GB IT LI NL SE

(56) References cited:
EP-A- 0 186 245
US-A- 3 278 311
US-A- 4 640 843
US-A- 4 680 191
US-A- 4 803 091

(73) Proprietor: **Hunt, Dewey Rinnel**
**1423 Vega Circle**
**Idaho Falls,**
**Idaho 83402 (US)**

Proprietor: **Hix, Veldon Max**
**163 West 145 North**
**Idaho Falls**
**Idaho 83402 (US)**

Proprietor: **Willard, Miles Jamison**

**154 East 49th North**
**Idaho Falls**
**Idaho 83404 (US)**

Proprietor: **Dayley, Kyle E.**
**268 North 4000 East**
**Rigby, ID 83442 (US)**

(72) Inventor: **Hunt, Dewey Rinnel**
**1423 Vega Circle**
**Idaho Falls,**
**Idaho 83402 (US)**
Inventor: **Hix, Veldon Max**
**163 West 145 North**
**Idaho Falls**
**Idaho 83402 (US)**
Inventor: **Willard, Miles Jamison**
**154 East 49th North**
**Idaho Falls**
**Idaho 83404 (US)**
Inventor: **Dayley, Kyle E.**
**268 North 4000 East**
**Rigby, ID 83442 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

(74) Representative: **Müller-Boré & Partner Patentanwälte**
**Postfach 26 02 47**
**D-80059 München (DE)**

**Description**

Background of the Invention

Snack foods have traditionally been manufactured from raw materials having a base either of potatoes (fresh, sliced or dehydrated) or corn. Corn snacks are either sheeted or extruded into a flat planar configuration (tortilla chips) or into various shapes depending upon extruder die design. Corn is typically prepared for inclusion in snack foods by either preparing a limed masa for a traditional Mexican flavor, or by simply cooking the corn without lime to avoid the Mexican flavor.

The most common method of preparing corn masa is to grind the cooked corn kernels in a stone grinder. Such stone grinders consist of a pair of cylindrical stones having radially fluted faces, with one stone stationary and the other rotating. Cooked corn is fed through an opening in the center of the stationary stone by an auger, and is ground as it is forced radially outwardly along the radial flute. Manufacturers of corn masa have recognized for many years that the production of acceptable masa is an art, not a science. Typically, an operator of a stone grinder having many years experience simply "feels" the ground corn exiting the stone grinder to determine whether or not it is acceptable. No empirical tests are used in the industry to determine whether or not an acceptable grind is occurring. Rather, if the ground corn exiting the stone grinders is too coarse to the feel, the operator simply reduces the gap between the stones; conversely, if the corn exiting the grinders is too fine, the operator increases the gap between the stones.

While the art of stone grinding corn is quite subjective, the results of a ground corn being too coarse or too finely ground can be dramatic. Fried snack foods made from coarsely ground corn have a grainy, sandy texture, and because of the coarse grinding, the snacks are crumbly and do not hold together well. Snacks made from corn too finely ground form a very dense, hard product which is unpleasantly brittle. Therefore, the correct grind on the corn masa is critical to manufacturing a consistent corn snack having acceptable organoleptic properties.

The grinding action of stone grinders tends to produce a relatively high proportion of "fines" in the ground corn. As used herein, the word "fines" means corn particles capable of passing through a U.S. #80 mesh screen (having an aperture diameter of 0.177 mm). As noted above, fines tend to produce a hard, dense, brittle product. In U.S. Patent No. 4,803,091, issued February 7, 1989, a process is disclosed for the manufacture of fried corn snacks wherein limed corn is produced by a combination of stone grinding followed by grating/cutting in a cutting mill, such as an Urschel Comitrol\ mill. The ground corn is incorporated into a dough, which is extruded in a spiral ribbon, subsequently cut into individual pieces and fried.

Manufacturers of fried masa-based corn snacks generally rely upon the natural expansion of the masa to effect the final product characteristics. However, because stone grinding produces a variable level of fines, expansion of corn snacks is often greater or less than optimal, resulting in a product having unpredictable organoleptic properties, such as taste, texture, grittiness or hardness. Consumers have come to accept these attributes as representative of fried masa-based corn snacks.

EP-A-0 186 245, US-A-3 278 311, US-A-4 640 843 and US-A-4 680 191 disclose fried corn snacks and a method of producing them. They show, however, only one cutting step and the maximum amount of fines is not mentioned as an essential feature.

Therefore, it is an object of the present invention to produce a masa-based fried corn snack having an expanded, less dense texture resulting from the inclusion of fewer fines in the dough. Additionally, ingredients added to the dough to induce additional expansion of the dough during frying are contemplated. Finally, it is an object of the present invention to provide a process whereby corn masa having a reasonably consistent particle size distribution can be produced, so that products having known attributes can be designed.

Summary of the Invention

The invention is defined by the claims.

In its broadest aspects, the present invention comprises a fried corn-based snack food product having a texture substantially more expanded than those previously manufactured from corn masa. The expanded texture of the inventive products results from a novel masa preparation technique, as well as the addition of expansion-inducing constituents to the masa dough.

According to the invention cooked corn is not ground by a stone grinder. Thus, the process for the manufacture of fried corn snacks comprises the steps of:

a. cooking whole corn kernels in an aqueous solution;

b. washing the whole corn kernels;

c. producing a comminuted corn by cutting the corn a first time by impelling the corn against a blade and through a screen, and successively comminuting the comminuted corn a second time by cutting the comminuted corn by impelling the corn against a second blade and through a second screen wherein the screens in both comminuting steps have a ratio of open area to screen material of from 1:2 to 4:1 and wherein the maximum amount of fines passing through a screen having an aperture of 0.177 mm is 10% and wherein a grinding step is excluded;

d. forming a dough of the comminuted corn of step c.;

e. extruding the dough either into individual dough pieces or into a continuous length of dough which is then cut into individual snack food pieces; and

f. frying the individual dough pieces, said process thereby forming a fried corn snack having a consistent expanded texture.

Preferably, from about 30% to about 50% of the corn comminuted a second time passes through a U.S. #40 mesh screen (having an aperture diameter of 0.42 mm), and less than about 30% passes through a 0.177 mm (U.S. #80 mesh) screen.

In a second embodiment of the present invention, an expansion-inducing starch or starch-containing ingredient is added to the corn masa to produce a dough which, when extruded and fried, exhibits substantially greater expansion in the fried product than would have been the case without the starch ingredient having been added. For example, commonly assigned U.S. Patent No. 4,623,548, discloses a process for increasing the expansion of cereal-based extruded snacks by adding (1) a high water-absorbing component (HIWAC) comprising one or more pregelatinized cereal starches or flours comprising from about 3% to about 40% by weight, of the total dry solids; and (2) a starch component comprising one or more ungelatinized starches comprising from about 10% to about 45% by weight, of the total dry solids. The HIWAC has a substantially greater ability to hold water throughout frying, until the gelatinization temperature of the residual raw starch contained in the dough is reached. This retains the water in the dough piece long enough to hydrate the residual raw starch in the dough to cause the starch to gelatinize and form an expanded, fried snack structure.

The preferred shape of the product of this invention is a fluted ring. The dough is extruded through a conventional extrusion apparatus in the shape of a ring having a smooth inner surface and an undulating, or fluted, outer surface. The size of the screen in the cutting mill through which the corn is directed must be sufficiently small to insure that particles exiting the cutting mill are smaller than the minimum dimension in the fluted die through which the dough is to be extruded. Applicant has found that the preferred dimensions of the fluted die are a minimum opening (between the center die post and the trough of the flutes) of about 0.85 mm, while the maximum diameter (between the center die post and the top, or radially outermost portion of the flute) of about 2.00 mm.

The process of the present invention utilizes a mixture of yellow dent and white dent corn cooked with lime in the conventional manner. The corn raw ingredients of this process are conventional in all respects. Extrusion is preferably through a conventional batch piston extruder, such as those manufactured by Heat and Control, Inc., or a continuous extruder such as the Model 750 manufactured by Marlin Research Corp.

Brief Description of the Drawing

Figure 1 is a graphic illustration of an expanded product made according to the process of the present invention;

Figure 2 is a graphic illustration of an expanded product; and

Figure 3 is a graph illustrating the relationship of corn moisture and comminuted corn particle size distribution.

Detailed Description of the Invention

In a preferred embodiment of the invention, the snack food product is a corn ring having dimensions of about 12 mm in length, 20 mm in width and about 2.35 mm in thickness. The inner surface of the ring is smooth, while the outer surface is provided with an undulating, or fluted, topography. The product after frying resembles other fried corn snacks currently on the market, such as Fritos\, or Spirals\. The product may be seasoned with salt or other seasonings, such as nacho or barbecue.

The products of this invention are produced by conventionally cooking whole corn kernels, comminuting the corn in successive cutting steps, forming an extruding the corn dough, and frying individual corn pieces.

The process of the present invention is inventive in three respects: (a) the novel cutting procedure to produce a particle size distribution resulting in fried snacks having optimal organoleptic properties, (b) the addition of expansion-inducing ingredients to the corn dough, and (c) the use of a novel die shape to produce the fried products of this invention.

In each of the examples set forth below, 18,144 kg (40 pounds) of a mixture of 75% yellow dent and 25% white dent corn was added to 29,03 kg (64 pounds) of cold water containing 364 g lime (or, 2% lime added based upon the weight of the corn). The mixture was cooked in a jacketed steam kettle and the temperature increased to boiling with occasional stirring. After simmering 25 minutes with constant stirring, the contents were added to 29,03 kg (64 pounds) of fresh water at 27°C (80°F), reducing the temperature to about 63°C (145°F). The cooked corn was soaked in water for about 16 hours, after which time the temperature had decreased to about 38°C (100°F). The liquid was drained and the corn kernels were rinsed in cold water to remove hulls and slime. After draining for about 5 minutes, the corn was further processed as set forth below.

The process of the present invention contemplates cutting the cooked corn kernels, but not grinding the kernels as is conventionally practiced with a stone grinder. A number of different rotary cutting techniques can be used for cutting the corn in the process of the present invention, such as the Fitzmill manufactured by the Fitzpatric Company, Applicants have found that cutting the cooked corn with a Urschel Comitrol mill provides exemplary results. Applicants have found that it is possible to design a particle size distribution in a batch of ground corn depending upon the particular cutting head chosen for the Comitrol mill. The cutting heads are provided in various configurations depending upon the relative ratio of the open area in the screen through which the cut corn is discharged. The screen material may be provided in various widths comprising from 33% of the total area of the screen (or, stated differently, a 2:1 ratio of screen material:open area) to about 80% open area (or a 1:4 ratio of screen material:open area). It is to be understood that, as used herein, the term "screen" or "screen material" is actually the cutting head of a Comitrol mill. Product is introduced into the radially innermost portion of the cutting head and impellers sweep the corn kernels against cutting blades and the "screen material", thereby reducing the corn kernels in size until they are small enough to pass through the open area in the cutting head or screen material.

The process of the present invention may be more easily understood with reference to the following examples:

EXAMPLE 1

Corn was cooked as set forth above. After draining, the corn was fed into an Urschel Comitrol mill fitted with a 2B 030030 head, the comminuted corn was collected and refed to the same Comitrol mill refitted with a 2B 010030 head. The 2B 030030 head (hereinafter "the 30/30 head") identifies an Urschel cutting head wherein the "2B" identifies the size and style of head, the initial three digits (030) identify the thickness of the bar separating adjacent open spaces and the final three digits (030) identify the width of the opening between adjacent bars. The bars and openings constitute what is defined herein as the "screen", and the bars correspond to the "screen material".

After being twice cut through the Comitrol mill, 3,400 g of the cut corn at about 48% moisture was mixed in a Hobart planetary mixer with a mixture of dry ingredients constituting 5% of the total solids on a moisture-free basis. The dry ingredients comprised 400 g of a pregelatinized lightly modified waxy maize starch manufactured by National Starch Co., 60 gm of salt and 25 g of a mono- and di-glyceride emulsifier manufactured by Durkee Industrial Foods. The corn and dry ingredients were mixed on a medium speed for approximately 40 seconds, after which 90 g of water was added over a period of 10 seconds, with mixing continuing for 40 seconds. After standing for approximately 15 minutes, 650 g of the dough was compressed to remove entrained air and placed in a piston extruder having dimensions of 5,1 cm (2 inches)(diameter) by 29,2 cm (11.5 inches) (length). The dough was extruded by a hydraulic piston at approximately 16,5 bar (240 psi) (dough pressure) through an annular fluted die. The die post had a smooth exterior surface, producing a smooth interior on the extruded dough. The fluted extrudate had a minimum thickness of about 0.87 mm and a maximum thickness of about 2.02 mm. The extruded dough tube was cut to appropriate lengths (about 12 mm) with a reciprocating wire, with individual dough pieces dropping directly into a fryer, where they were fried for approximately 105 seconds at 199°C (390°F) to a moisture content of less than 2%.

## EXAMPLE 2

A corn dough was prepared as in Example 1, with the exception that no dry ingredients or emulsifier were added to the dough. One hundred percent corn dough was extruded and fried as set forth in Example 1.

## EXAMPLE 3

Products were produced with a 95% corn dough and a 100% corn dough as set forth in Examples 1 and 2 in the shape of a ring having a smooth, non-fluted exterior and a relatively flat rectangular chip. The smooth ring was extruded with an 18.1 mm outside diameter and an inner diameter of 1.2 mm. The rectangular chip was extruded as a ribbon, or strip 18.1 mm wide and 1.3 mm thick.

## EXAMPLE 4

Products were produced to determine the correct level of the expansion-inducing ingredient.

A. The level of the pregelatinized starch from Example 1 was increased to 8% resulting in an expansion of 1.70. This product was determined by a taste panel to be too soft in texture.

B. The smooth ring die of Example 3 was used to compare the starch ingredient of Example 1 to a pregelatinized amioca starch made by American Maize Company each added to separate batches at a rate of 5% of total solids. Expansions of 1.53 and 1.62 respectively were obtained, as compared to 1.29 for a control sample of this corn at 100% corn.

C. A double-fluted die (undulations on both the inner and outer surfaces) was used to extrude a mixture of amioca starch and pregelatinized corn flour (Illinois Cereal Mill No. 965) at 5% each of total dry solids. These rings were determined to have good texture with an expansion of 1.67 as cmopared to an expansion of 1.54 for a 100% corn product control extruded through the same die.

D. Using the same die as in C, the level of amioca starch and gelatinized corn flour mixture was increased to 15% each. The product had an expansion of 1.62 as compared to 1.28 for a control made with 100% corn. The texture was determined to be dense, less crips, and took longer to chew before swallowing. The corn masa flavor was not as strong in this sample.

## EXAMPLE 5

A. Lime-cooked corn was washed and drained as set forth above. A first portion was ground in a conventional stone grinder, adjusted so that approximately 5-10% of the corn particles exiting the grinder were retained on a 2 mm (U.S. #10 mesh) screen, and about 25-30% were retained on a 0,84 mm (U.S. #20 mesh) screen. The stone ground corn was immediately comminuted in an Urschel Comitrol mill fitted with a 10/30 head;

B. A second portion of the lime-cooked corn was comminuted in a Comitrol mill fitted with a 30/30 head, and then subjected to a second comminution through a Comitrol mill fitted with a 10/30 head;

C. A third portion of the lime-cooked corn was comminuted a first time using a 10/20 head, and then comminuted a second time using the same 10/20 head;

D. A fourth portion of the lime-cooked corn was comminuted a first time using a 10/30 head on a Comitrol mill, and then comminuted a second time on a Comitrol mill using a 10/30 head.

E. A fifth portion of the lime-cooked corn was subjected to a first comminution through a Comitrol mill using a 15/30 head, and then subjected to a second comminution using a 10/20 head. The 15/30 head used in this example had a different geometry than did the other heads used herein. The 15/30 head was designated a "K" head rather than the "B" heads otherwise used. The different head geometry will affect the manner in which the cooked corn is impelled against the knives, and will thereby affect the particle size produced;

F. A sixth portion of the lime-cooked corn was comminuted first and second times using a 30/30 head.

Each of the samples comminuted in Example 5 were tested to determine the particle size distribution after both the first and second comminution. A 100 g sample comminuted corn was placed in a beaker of warm water and stirred gently to break up agglomerations. This mixture was poured onto tared screens and the mixture sprayed with warm water until all of the particles capable of passing through the screen had done so. The top screen was removed and the process repeated until only the 0,177 mm (U.S. #80 mesh) screen remained. The screens were dried on the bottom and sides with a towel, drained 4-5 minutes and reweighed to determine the amount of product retained on each screen. In a number of instances, the

EP 0 423 598 B1

measured amount of corn particles was greater than the amount initially utilized, because of water absorption. In such cases, the measured amounts were calculated to a 100% basis.

EXAMPLE 6

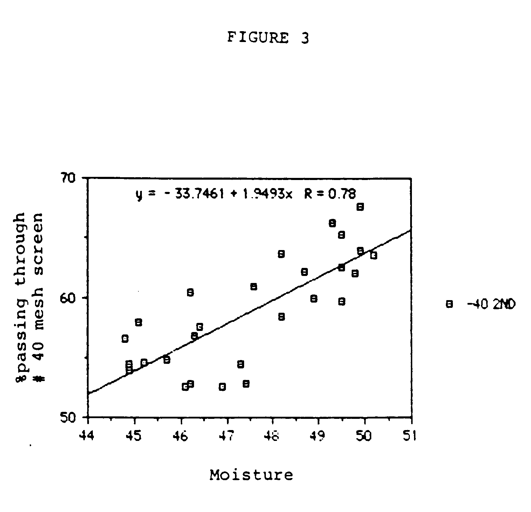

A large quantity of corn ring product was produced by the process of Example 1 for consumer testing. The comminuted corn samples were analyzed for particle size and moisture content. The particle size analysis was substantially similar to that reported in Example 1, and the relationship of the particle size to moisture is reported in Figure 3.

Numerous of the products produced by the examples noted above were tested for expansion, hardness and texture.

The expansion during frying is believed to be a measure of significance in determining consumer appeal -- a somewhat expanded product is desirable over a nonexpanded product, while a highly expanded product may be less desirable than a moderately expanded product. A plurality of product samples were randomly withdrawn from a product batch, and the thickness measured. The expansion for smooth rings and flat chip-type products was defined as the maximum thickness of the product divided by the width of the die opening. For fluted ring products, the expansion of only the base portion was determined, the base being the minimum thickness of the fluted product. It was visually determined that substantially all the expansion in a fluted product occurred in the base portion with very little expansion taking place in the undulating outer ribbed portion. The expansion was determined by subtracting the height of the die peak from the thickness measured in the product and dividing this measurement by the minimum die opening. Selected samples were subjected to hardness measurements by the Food Technology Corporation of Rockville, Maryland, using an FTC Model T-2100-CI Integrating Texture Test System. Finally, a texture profile was determined by blind sampling by trained testers using a 60-point scale, wherein higher numbers indicate more of the measured criteria.

As illustrated in Table I, the fluted ring made with the expansion-inducing starch of Example 1 had greater expansion and substantially lower hardness than the 100% corn fluted ring of Example 2. Additionally, the organoleptic analysis of texture indicates that the greater expansion results in perceptively lower hardness, less density and quicker "breakdown" (or disappearance within the mouth). The greater expansion of smooth rings and flat strips made with the 95% corn/5% starch formula of Example 3 is also apparent in Table I, consistent with the results of Examples 1 and 2. While the difference in the hardness measurement is not as dramatic, the texture analysis is consistent: products made from 95% corn and 5% of the expansion-inducing starch produce a product preferable to the 100% corn product.

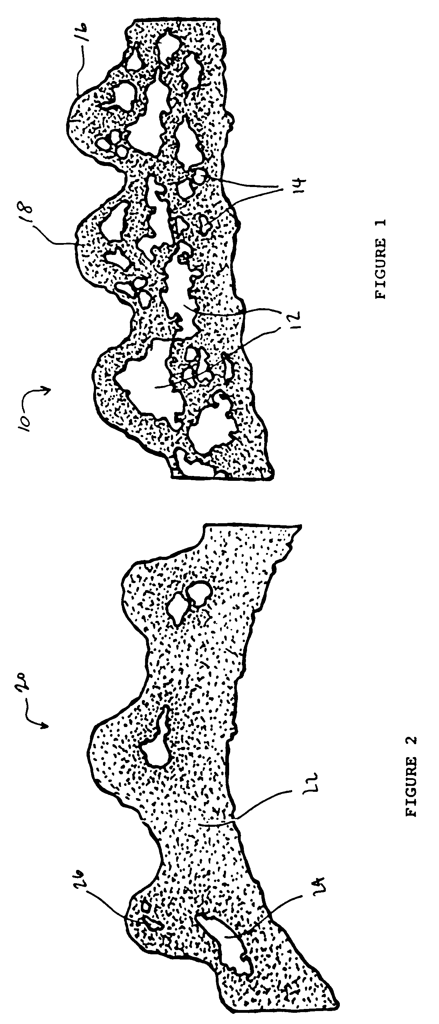

The expansion of the products of Examples 1 and 2 are illustrated schematically in Figures 1 and 2. The product of Example 1 is illustrated in Figure 1 wherein a portion of the fluted ring 10 is illustrated with a number of large separated areas 12 and a larger number of smaller voids 14. Most of the flutes 16 exhibit a dense, unexpanded area 18 at the apex of the ribbed or fluted portion. Conversely, the relatively unexpanded fluted rings 20 of Example 2 are illustrated in Figure 2 having predominantly the dense unexpanded regions 22, with relatively few large voids 24 and even fewer small voids 26. The relatively light, airy texture of the products of Example 1 result in the superior texture profile illustrated in Table I. The expanded nature of the corn ring of Figure 1 is representative of products produced with the expansion-inducing starch in Example 3.

Example 4 illustrates that there are a number of ingredients capable of serving the expansion-inducing role contemplated herein. However, the preferred starch is a pregelatinized starch at a level of about 5% on a dry solids basis; higher levels result in a loss of corn flavor.

The results of Example 5 are illustrated in Table II below. Applicants believe that the percentage of the final product ("Pass 2") passing through a 0,42 mm (U.S. #40 mesh) screen (-40), and the percentage passing through a 0,177 mm (U.S. #80 mesh) screen (-80) are of particular relevance to the production of products according to the present invention. "Fines" are those particles passing through the 0,177 mm (#80 mesh) screen and are believed to play an important role in the expansion, hardness and texture profile of such products. A relatively high percentage of fines (anything over about 10%) produces a relatively dense, hard product when fried, which does not exhibit the expansion illustrated in Figure 1 which is desired. As indicated in Table II, the product of Example 5A made according to the two-step process of the '091 patent produces a product having 62% of the corn particles passing through a 0,42 mm (#40 mesh) screen and 40% passing through a 0,177 (#80 mesh) screen. Examples 5B-F illustrate the effects of different screen sizes on the final particle size analysis. As noted above, the parameters of the screen are indicated with two numbers: viz., 10/30 indicates a bar having a width of 0,25 mm (0.010 inches) and an opening between adjacent bars of 0,76 mm (.030 inches). Therefore, a 10/30 screen would have a ratio of screen

7

material:open area of 1:3.

As is apparent from Table II, the size of the screen material has little effect on the ultimate particle size analysis. However, the relative size of the open area is critically important in producing products having an appropriate particle size distribution. For example, Examples 5C and 5E, wherein the second pass is made through a screen having a 0,5 mm (.020-inch) opening, the particles passing through the 0,42 mm (#40 mesh) screen exceed 80% and those passing through the 0,177 mm (#80 mesh) screen exceed 60%. By contrast, the products of Examples 5B, 5D and 5F, wherein the cooked corn is subjected only to an opening having a diameter of 0,76 mm (.030 inches), about 40% of the cut corn passes a 0,42 mm (#40 mesh) screen and almost nothing passes a 0,177 mm (#80 mesh) screen. As illustrated, the preferred process of Examples 5B, 5D and 5F produce a relatively narrow particle size distribution: most of the corn is retained on either a 0,42 mm or 0,25 mm (#40 or #60 mesh) screen.

Examples 5B, 5D and 5F illustrate the process of the preferred embodiment, and illustrate ratios of screen material:open area of from 1:3 to 1:1. However, screens having such ratios of from 1:4 (a 10/40 head) to 2:1 (a 40/20 head) would be operative in the process of this invention. While the heads having ratios of from 1:4 to 2:1 would be operative in the process of the present invention, the preferred range appears to be a ratio of from 1:1 to 1:3.

In order to determine whether or not variability within the various samples of comminuted corn can be explained by variability in the moisture of such corn, the moisture content of the comminuted corn as it exited the cutting mill a second time was measured. As illustrated in Figure 3, as the moisture of the corn increases, the particle size distribution becomes finer -- that is, more moist corn is more finely comminuted. Therefore, corn moisture when comminuted appears to play a significant role in the particle size distribution.

Applicants have determined that a consumer-preferred shape of the corn products of the present invention is a fluted ring. Applicants have extruded the corn dough of the present invention through numerous dies having various maximum and minimum die openings. The preferred die openings appear to range from a minimum of about 0.85 mm to a maximum of about 2.00 mm with approximately 18 rounded flutes about the circumference. However, Applicants have demonstrated minimum die openings in the range of about 0.5-1.2 mm, and maximum die openings in the range of about 1.45-2.25 mm.

TABLE I

| | FLUTED RING | | Example 3 | | Example 3 | |
|---|---|---|---|---|---|---|
| | Example 1 | Example 2 | SMOOTH RING | | FLAT STRIP | |
| | | | 100% Corn | 95% Corn | 100% Corn | 95% Corn |
| EXPANSION | 1.25 | 1.11 | 1.29 | 1.32 | 1.09 | 1.18 |
| HARDNESS | | | | | | |
| FTC Force-distance (peak lbs. force) | 264 | 692 | 378 | 262 | 362 | 360 |
| TEXTURE | | | | | | |
| Hardness | 35 | 44 | 35 | 30 | 36 | 32 |
| Denseness | 34 | 42 | 28 | 24 | 32 | 28 |
| Breakdown | 35 | 22 | 25 | 32 | 28 | 32 |

TABLE II
PARTICLE SIZE ANALYSIS

| mm | | Example 5A (stone grind + 10/30) | | Example 5B (30/30 + 10/30) | | Example 5C (10/20 + 10/20) | | Example 5D (10/30 + 10/30) | | Example 5E (15/30 + 10/20) | | Example 5F (30/30 + 30/30) | |
|---|---|---|---|---|---|---|---|---|---|---|---|---|---|
| | | Pass 1 | Pass 2 | Pass 1 | Pass 2 | Pass 1 | Pass 2 | Pass 1 | Pass 2 | Pass 1 | Pass 2 | Pass 1 | Pass 2 |
| +2 | +10 mesh | 6.8 | 0 | 0 | 0 | 0 | 0 | 0 | 0 | 0 | 0 | 0 | 0 |
| +0,84 | +20 mesh | 32.6 | 5.9 | 22.4 | 7.1 | 4.9 | 0 | 36.5 | 6.8 | 5.8 | 0 | 28.3 | 6.4 |
| +0,42 | +40 mesh | 27.8 | 31.9 | 54.8 | 55.2 | 36.9 | 18.4 | 42.3 | 50.2 | 38.3 | 15.1 | 45.5 | 53.9 |
| -0,42 | -40 mesh | 32.8 | 62.2 | 22.8 | 37.7 | 58.2 | 81.6 | 21.2 | 43.0 | 55.9 | 84.9 | 26.2 | 39.7 |
| +0,25 | +60 mesh | 8.0 | 13.2 | 16.6 | 26.0 | 19.1 | 10.8 | 15.4 | 37.0 | 17.5 | 13.5 | 18.2 | 13.5 |
| +0,177 | +80 mesh | 5.7 | 8.3 | 6.2 | 9.0 | 10.2 | 6.3 | 5.8 | 6.0 | 18.7 | 8.0 | 8.0 | 6.5 |
| -0,177 | -80 mesh | 19.1 | 40.7 | 0 | 2.7 | 28.9 | 64.5 | 0 | 0 | 19.7 | 63.4 | 0 | 0 |

## Claims

1. A process for the manufacture of fried corn snacks comprising the steps of:
   a. cooking whole corn kernels in an aqueous solution;
   b. washing the whole corn kernels;
   c. producing a comminuted corn by cutting the corn a first time by impelling the corn against a blade and through a screen, and successively comminuting the comminuted corn a second time by cutting the comminuted corn by impelling the corn against a second blade and through a second screen wherein the screens in both comminuting steps have a ratio of open area to screen material of from 1:2 to 4:1 and wherein the maximum amount of fines passing through a screen having an aperture of 0.177 mm is 10% and wherein a grinding step is excluded;
   d. forming a dough of the comminuted corn of step c.;
   e. extruding the dough either into individual dough pieces or into a continuous length of dough which is then cut into individual snack food pieces; and
   f. frying the individual dough pieces, said process thereby forming a fried corn snack having a consistent expanded texture.

2. The process as recited in Claim 1, wherein the aqueous solution is a lime and water solution.

3. The process as recited in Claims 1 or 2, wherein the comminuted corn is mixed with from 2% to 15% by weight of an expansion-inducing starch-containing ingredient to form a dough.

4. The process as recited in one or more of Claims 1 to 3, wherein comminuting the cooked whole kernel corn is done by impelling the corn in successive steps against a blade and through a screen.

5. The process as recited in one or more of Claims 1 to 4, further comprising comminuting the corn a first time through a screen having a ratio of open area to screen material of 1:1.

6. The process as recited in one or more of Claims 1 to 5, further comprising comminuting the corn a second time through a screen having a ratio of open area to screen material of 3:1.

7. The process as recited in one or more of Claims 1 to 6, further comprising comminuting the corn a first time to produce a particle size distribution wherein less than 40% of the comminuted corn passes through a 0.42 mm (#40 mesh) screen.

8. The process as recited in one or more of Claims 1 to 7, further comprising comminuting the corn a second time to produce a particle size distribution wherein 40% of the comminuted corn passes through a 0.42 mm (#40 mesh) screen and less than 10% passes through 0.177 mm (#80 mesh) screen.

9. The process as recited in one or more of Claims 1 to 8, further comprising comminuting the corn a first time to produce a particle size distribution wherein less than 30% of the comminuted corn passes through a 0.42 mm (#40 mesh) screen, and comminuting the corn a second time to produce a particle size distribution wherein less than 40% of the comminuted corn passes through a 0.42 mm (#40 mesh) screen and less than 10% passes through a 0.177 mm (#80 mesh) screen.

10. The process as recited in one ore more of the preceding claims further comprising comminuting the corn by impelling it with a rotary impeller moving across a plurality of blades and a screen.

11. The process as recited in one or more of the preceding claims, further comprising extruding the dough through a die having a smooth inner surface.

12. The process as recited in one or more of the preceding claims, further comprising extruding the dough through a die having an undulating inner surface.

13. The process as recited in one or more of the preceding claims, further comprising extruding the dough through a fluted-ring die, wherein the ring die is provided with a smooth inner surface and an undulating outer surface.

14. The process as recited in one or more of the preceding claims, further comprising extruding the dough through a ring die having a minimum die opening of from 0.5 mm to 1.2 mm and a maximum die opening of from 1.45 mm to 2.25 mm.

15. A product obtainable according to a process of one or more of the preceding claims.

**Patentansprüche**

1. Verfahren zur Herstellung von fritierten Maissnacks, umfassend die Stufen:
   a) Kochen von ganzen Maiskernen in einer wäßrigen Lösung
   b) Waschen der ganzen Maiskerne
   c) Erzeugung von zerkleinertem Mais durch Schneiden des Korns ein erstes Mal indem man das Korn gegen ein Schneidemesser und durch ein Sieb treibt und anschließend den zerkleinerten Mais ein zweites Mal zerkleinert, indem man den zerkleinerten Mais schneidet, indem man den Mais gegen ein zweites Schneidemesser und durch ein zweites Sieb treibt, wobei die Siebe in beiden Zerkleinerungsstufen ein Verhältnis der offenen Fläche zum Siebmaterial von 1:2 bis 4:1 haben und wobei die maximale Menge an Feinanteilen, die durch ein Sieb mit einer Öffnung von 0,177 mm gehen, 10% beträgt und wobei eine Mahlstufe ausgeschlossen ist

d) Bildung eines Teigs des zerkleinerten Maises von Stufe c)

e) Extrudieren des Teigs entweder zu einzelnen Teigstücken oder zu einer kontinuierlichen Länge von Teig, die dann in einzelne Snackstücke geschnitten wird und

f) Fritieren der einzelnen Teigstücke, wodurch dieses Verfahren einen fritierten Maissnack mit einer übereinstimmenden geblähten Textur bildet.

2. Verfahren nach Anspruch 1, dadurch gekennzeichnet, daß die wäßrige Lösung eine Kalk- und Wasserlösung ist.

3. Verfahren nach Anspruch 1 oder 2, dadurch gekennzeichnet, daß der zerkleinerte Mais mit 2 bis 15 Gew.-% eines das Aufblähen induzierenden stärkehaltigen Bestandteiles zur Bildung eines Teigs gemischt wird.

4. Verfahren nach einem oder mehreren der Ansprüche 1 bis 3, dadurch gekennzeichnet, daß die Zerkleinerung des gekochten, aus ganzen Kernen bestehenden Maises erfolgt, indem der Mais in aufeinanderfolgenden Stufen gegen ein Schneidmesser und durch ein Sieb getrieben wird.

5. Verfahren nach einem oder mehreren der Ansprüche 1 bis 4, dadurch gekennzeichnet, daß man den Mais ein erstes Mal durch ein Sieb mit einem Verhältnis von offener Fläche zu Siebmaterial von 1:1 zerkleinert.

6. Verfahren nach einem oder mehreren der Ansprüche 1 bis 5, dadurch gekennzeichnet, daß man den Mais ein zweites Mal durch ein Sieb mit einem Verhältnis von offener Fläche zu Siebmaterial von 3:1 zerkleinert.

7. Verfahren nach einem oder mehreren der Ansprüche 1 bis 6, dadurch gekennzeichnet, daß man den Mais ein erstes Mal unter Erzeugung einer Teilchengrößenverteilung zerkleinert, bei welcher weniger als 40% des zerkleinerten Maises durch ein 0,42 mm (40 mesh)-Sieb gehen.

8. Verfahren nach einem oder mehreren der Ansprüche 1 bis 7, dadurch gekennzeichnet, daß man den Mais ein zweites Mal unter Erzeugung einer Teilchengrößenverteilung zerkleinert, bei welcher 40% des zerkleinerten Maises durch ein 0,2 mm (40 mesh)-Sieb und weniger als 10% durch ein 0,177 mm (80 mesh)-Sieb gehen.

9. Verfahren nach einem oder mehreren der Ansprüche 1 bis 8, dadurch gekennzeichnet, daß man den Mais ein erstes Mal unter Erzeugung einer Teilchengrößenverteilung zerkleinert, bei welcher weniger als 30% des zerkleinerten Maises durch ein 0,42 mm (40 mesh)-Sieb gehen und den Mais ein zweites Mal unter Erzeugung einer Teilchengrößenverteilung zerkleinert, bei welcher weniger als 40% des zerkleinerten Maises durch ein 0,42 mm (40 mesh)-Sieb und weniger als 10% durch ein 0,177 mm (80 mesh)-Sieb gehen.

10. Verfahren nach einem oder mehreren der vorhergehenden Ansprüche, dadurch gekennzeichnet, daß man den Mais zerkleinert, indem man ihn mit einem rotierenden Flügelrad antreibt, das sich über eine Mehrzahl von Schneidklingen und ein Sieb bewegt.

11. Verfahren nach einem oder mehreren der vorhergehenden Ansprüche, dadurch gekennzeichnet, daß man den Teig durch eine Düse mit einer glatten Innenoberfläche extrudiert.

12. Verfahren nach einem oder mehreren der vorhergehenden Ansprüche, dadurch gekennzeichnet, daß man den Teig durch eine Düse mit einer gewellten inneren Oberfläche extrudiert.

13. Verfahren nach einem oder mehreren der vorhergehenden Ansprüche, dadurch gekennzeichnet, daß man den Teig durch eine kannelierte Ringdüse extrudiert, wobei die Ringdüse mit einer glatten Innenoberfläche und einer gewellten äußeren Oberfläche versehen ist.

14. Verfahren nach einem oder mehreren der vorhergehenden Ansprüche, dadurch gekennzeichnet, daß man den Teig durch eine Ringdüse extrudiert, die eine minimale Düsenöffnung von 0,5 mm bis 1,2 mm und eine maximale Düsenöffnung von 1,45 mm bis 2,25 mm hat.

**15.** Produkt, erhältlich gemäß einem Verfahren nach einem oder mehreren der vorhergehenden Ansprüche.

**Revendications**

**1.** Procédé pour la fabrication de snacks frits à base de maïs comportant les étapes :
a. de cuisson des grains de maïs entiers dans une solution aqueuse ;
b. de lavage des grains de maïs entiers ;
c. de production d'un maïs broyé en coupant le maïs une première fois en le poussant contre une lame et à travers un tamis, et en broyant successivement le maïs broyé une seconde fois en coupant le maïs broyé en poussant le maïs contre une seconde lame et à travers un second tamis, ou les tamis dans les des étapes de broyage ont une proportion de surface ouverte par rapport à la grille allant de 1:2 à 4:1 et où la quantité maximale de tamisat passant à travers un tamis ayant une ouverture de 0,177 mm est 10% et où une étape de broyage est exclue ;
d. d'élaboration d'une pâte à partir du maïs broyé de l'étape c. ;
e. d'extrusion de la pâte soit par morceaux de pâte individuels soit en une longueur de pâte continue qui est ensuite coupée en morceaux individuels de snacks alimentaires ; et
f. de friture des morceaux de pâte individuels, ledit procédé élaborant par ce moyen un snack frit à base de maïs ayant une texture consistante dilatée.

**2.** Procédé comme énuméré dans la Revendication 1, dans lequel la solution aqueuse est une solution de lime et d'eau.

**3.** Procédé comme énuméré dans la Revendication 1 ou 2, dans lequel le maïs broyé est mélangé avec 2% à 15% en poids d'un ingrédient contenant de l'amidon produisant une expansion pour former une pâte.

**4.** Procédé comme énuméré dans une ou plusieurs des Revendications 1 à 3, dans lequel le broyage du maïs en grains entiers cuit est effectué en poussant le maïs par étapes successives contre une lame et à travers un tamis.

**5.** Procédé comme énuméré dans une ou plusieurs des Revendications 1 à 4, comportant en outre le broyage du maïs une première fois à travers un tamis ayant une proportion de surface ouverte par rapport à la grille de 1 : 1.

**6.** Procédé comme énuméré dans une ou plusieurs des Revendications 1 à 5, comportant en outre le broyage du maïs une seconde fois à travers un tamis ayant une proportion de surface ouverte par rapport à la grille de 3 : 1.

**7.** Procédé comme énuméré dans une ou plusieurs des Revendications 1 à 6, comportant en outre le broyage du maïs une première fois pour produire une répartition granulométrique où moins de 40% du maïs broyé passe à travers un tamis de 0,42 mm (#40 mesh).

**8.** Procédé comme énuméré dans une ou plusieurs des Revendications 1 à 7, comportant en outre le broyage du maïs une seconde fois pour produire une répartition granulométrique où 40% du maïs broyé passe à travers un tamis de 0,42 mm (#40 mesh) et moins de 10% passe à travers un tamis de 0,177 mm (#80 mesh).

**9.** Procédé comme énuméré dans une ou plusieurs des Revendications 1 à 8, comportant en outre le broyage du maïs une première fois pour produire une répartition granulométrique où moins de 30% du maïs broyé passe à travers un tamis de 0,42 mm (#40 mesh) et le broyage du maïs une seconde fois pour produire une répartition granulométrique où moins de 40% du maïs broyé passe à travers un tamis de 0,42 mm (#40 mesh) et moins de 10% passe à travers un tamis de 0,177 mm (#80 mesh).

**10.** Procédé comme énuméré dans une ou plusieurs des revendications précédentes, comportant en outre le broyage du maïs en le poussant au moyen d'un rotor hélicoïdal à travers une pluralité de lames et un tamis.

**11.** Procédé comme énuméré dans une ou plusieurs des revendications précédentes, comportant en outre l'extrusion de la pâte à travers une matrice ayant une paroi interne lisse.

**12.** Procédé comme énuméré dans une ou plusieurs des revendications précédentes, comportant en outre l'extrusion de la pâte à travers une matrice ayant une paroi interne ondulée.

**13.** Procédé comme énuméré dans une ou plusieurs des revendications précédentes, comportant en outre l'extrusion de la pâte à travers une matrice cannelée à anneaux, où la matrice à anneaux est pourvue d'une paroi interne lisse et d'une paroi externe ondulée.

**14.** Procédé comme énuméré dans une ou plusieurs des revendications précédentes, comportant en outre l'extrusion de la pâte à travers une matrice à anneaux ayant une ouverture minimale de la matrice allant de 0,5 mm à 1,2 mm et une ouverture maximale de la matrice allant de 1,45 mm à 2,25 mm.

**15.** Produit que l'on peut obtenir selon un procédé d'une ou de plusieurs des revendications précédentes.

FIGURE 2

FIGURE 1

EP 0 423 598 B1

FIGURE 3